# EUROPEAN PATENT APPLICATION

(11) **EP 4 141 719 A1**
(43) Date of publication of application: **01.03.2023**
(21) Application number: 21193442.7
(22) Date of filing: 27.08.2021
(51) Int. Cl.: G06F 21/62, G06F 21/64, H04L 9/32, H04L 9/40

(54) **MONITORING AND CONTROLLING A DATA FLOW TO A DISTRIBUTED DATABASE SYSTEM**

(71) Applicant: Siemens Aktiengesellschaft, 80333 München (DE)
(72) Inventor: Falk, Rainer, 85586 Poing (DE); Kasinathan, Prabhakaran, 81549 München (DE); Singh, Saurabh Narayan, 81739 München (DE); Wimmer, Martin, 85579 Neubiberg (DE)

(57) **Abstract**

The invention provides an apparatus and a computer-implemented method for monitoring and controlling a data flow from a network (NW) to a distributed database system (BC), e.g., a blockchain. Data received from the network (D1) are classified according to predefined data protection levels. This classified data are checked against security policy rules of the network. The classified data is processed depending on the check result and a destination is assigned to the classified data depending on the check result. The processed data is sent to the assigned destination, wherein the assigned destination is the distributed database network (BC), a private channel (CH) of the distributed database network or a separate storage (S).

## Description

The present invention relates to an apparatus and a computer-implemented method for monitoring and controlling a data flow from a network to a distributed database system, as well as a computer program product.

Distributed databases like blockchains amongst others, are characterized through implementing distributed ledger technology and realizing an immutable audit log. Therefore, information stored in the ledger is accessible and verifiable by all parties that participate in the collaborative network.

Blockchains can be set up as permissionless or permissioned blockchains. For permissionless blockchains, usually anyone can access the stored information. For permissioned blockchains, access is usually restricted to a group of known and authorized entities/organizations.

Because of providing an immutable audit log, information stored in the distributed database cannot be removed, altered and/or modified by one single organization without being noticed/agreed by other parties. However, in some use cases, e.g., when corporate proprietary information is stored in the ledger, this setup can also present a risk. The selection of information to be stored in the distributed database must be well-considered since it cannot be deleted. As data can easily be sent to the distributed ledger and stored there by any client, there is the risk of, e.g., corporate proprietary information leaving corporate boundaries unintentionally and being revealed to other parties.

Possible solutions to this problem involve the use of off-chain data storage, private channels or side-chains. However, all these solutions still provide a way to store data in a separate place other than the commonly shared blockchain, losing the benefits of the blockchain.

It is therefore an objective of the present invention to control data transfer to and storage in a distributed database system, such as a blockchain.

The objective is solved by the features of the independent claims. The dependent claims contain further developments of the invention.

The invention provides according to a first aspect an apparatus for monitoring and controlling a data flow from a network to a distributed database system, the apparatus comprising:
- an interface connected to the network and configured to receive data from the network,
- a classification unit configured to determine a data classification of the received data according to predefined data protection levels and to output classified data,
- a check unit configured to check the classified data against security policy rules of the network and to output a check result,
- a data processing unit configured
   - to process the classified data depending on the check result and to output processed data,
      and
   - to assign a destination to the classified data depending on the check result,
   and
- a sender configured to block the processed data or to send the processed data to the assigned destination, wherein the assigned destination is the distributed database system, a private channel of the distributed database system or a separate storage.

Unless indicated otherwise in the description below, the terms "perform", "calculate", "computer-aided", "compute", "discover", "generate", "configure", "reconstruct" and the like preferably relate to actions and/or processes and/or processing steps that alter and/or produce data and/or that convert data into other data, the data being able to be presented or available as physical variables, in particular, for example as electrical impulses. In particular, the expression "computer" should be interpreted as broadly as possible in order to cover in particular all electronic devices having data processing properties.

Computers can therefore be for example personal computers, servers, programmable logic controllers (PLCs), handheld computer systems, Pocket PC devices, mobile radios and other communication devices that can process data in computer-aided fashion, processors and other electronic devices for data processing.

A processor can be in particular a central processing unit (CPU), a microprocessor or a microcontroller, for example an application-specific integrated circuit or a digital signal processor, possibly in combination with a memory unit for storing program instructions, etc. A processor can, by way of example, also be an IC (integrated circuit), in particular an FPGA (field programmable gate array) or a SoC (system on chip) or an ASIC (application-specific integrated circuit) or a multi-chip module, or a DSP (digital signal processor) or a graphics processor GPU (graphics processing unit). A processor can also be understood to mean a virtualized processor, a virtual machine or a soft CPU. It can, by way of example, also be a programmable processor that is equipped with configuration steps for carrying out the method according to embodiments of the invention or that is configured by means of configuration steps such that the programmable processor realizes the features according to embodiments of the invention for the method, the component, the units or other aspects and/or sub-aspects of embodiments of the invention.

Within the context of embodiments of the invention, a "unit" can be understood to mean for example a processor and/or a memory unit for storing program instructions. By way of example, the processor is configured specifically to execute the program instructions such that the processor performs functions to implement or perform the method according to embodiments of the invention or a step of the method according to embodiments of the invention.

Within the context of embodiments of the invention, "assign", in particular in regard to data and/or information, can be understood to mean for example computer-aided assignment of data and/or information.

Within the context of embodiments of the invention, "provide", in particular in regard to data and/or information, can be understood to mean for example computer-aided provision. Provision is effected for example via an interface (e.g. a database interface, a network interface, an interface to a memory unit). This interface can be used for example to convey and/or send and/or retrieve and/or receive applicable data and/or information during the provision.

Within the context of embodiments of the invention, "smart contract process" can be understood to mean in particular an execution of a program code (e.g., of the control instructions) in a process by the distributed database system or the infrastructure thereof. A "smart contract process" may validate data before it is inserted into the distributed data base system.

Within the context of embodiments of the invention, "insertion into the distributed database system" and the like can be understood to mean for example that, in particular, a transaction or the transactions or a data block with its transactions is conveyed to one or more nodes of a distributed database system. If these transactions are for example validated successfully (e.g., by the node/s), these transactions are in particular concatenated as a new data block with at least one existing data block of the distributed database system. For this purpose, the applicable transactions are stored for example in a new data block. In particular, this validation and/or concatenation can be performed by a trusted node (e.g., a mining node, a blockchain oracle or a blockchain platform).

Within the context of embodiments of the invention, "transaction" or "transactions" can be understood to mean for example a smart contract, a data structure or a transaction data record that, in particular, each comprise one of the transactions or multiple transactions. Within the context of embodiments of the invention, "transaction" or "transactions" can also be understood to mean for example the data of a transaction of a data block of a blockchain. A transaction can in particular comprise a program code that provides a smart contract, for example. By way of example, within the context of embodiments of the invention, a transaction can also be understood to mean a control transaction and/or confirmation transaction. Alternatively, a transaction can, by way of example, be a data structure that stores data (e.g., the control instructions). A transaction can in particular comprise a program code or a reference to a program code that provides a smart contract, for example.

Within the context of embodiments of the invention, a "program code" (e.g., a smart contract) can be understood to mean for example a program instruction or multiple program instructions, in particular stored in one or more transactions. The program code is in particular executable and is executed by the distributed database system, for example. This can be realized by means of an execution environment (e.g., a virtual machine), for example, the execution environment or the program code preferably being Turing complete. The program code is preferably executed by the infrastructure of the distributed database system. This involves for example a virtual machine being realized by the infrastructure of the distributed database system.

Within the context of embodiments of the invention, a "smart contract" can be understood to mean for example an executable program code (see in particular the "program code" definition). The smart contract is preferably stored in a transaction of a distributed database system (e.g., a blockchain), for example in a data block of the distributed database system. By way of example, the smart contract can be executed in the same way as explained in the definition of "program code", in particular within the context of embodiments of the invention.

Within the context of embodiments of the invention, a "distributed database system", which, by way of example, can also be referred to as a distributed database, can be understood to mean for example a locally distributed database, a blockchain, a distributed ledger, a distributed memory system, a distributed ledger technology (DLT) based system (DLTS), a revision-proof database system, a cloud, a cloud service, a blockchain in a cloud or a peer-to-peer database.

The distributed database system can be a public distributed database system (e.g., a public blockchain) or a closed (or private) distributed database system (e.g., a private blockchain), for example.

A distributed database system can also be a distributed communication system for data interchange or a peer-2-peer communication system or a peer-2-peer application, for example. This can be a network or a peer-2-peer network, for example. A/the distributed database system can also be a local distributed database system and/or a local distributed communication system, for example.

Within the context of embodiments of the invention, "data block", which, in particular depending on context and implementation, can also be referred to as "link" or "block", can be understood to mean for example a data block of a distributed database system (e.g., a blockchain or a peer-to-peer database).

Within the context of embodiments of the invention, a "blockchain node", "node", "node of a distributed database system" and the like can be understood to mean for example devices (e.g., field devices), computers, smartphones, clients, or subscribers that perform operations for (with) the distributed database system (e.g., a blockchain). Such nodes can, by way of example, execute transactions of a distributed database system or the data blocks thereof or insert or concatenate new data blocks with new transactions into the distributed database system by means of new data blocks. The devices are for example devices of a technical system and/or industrial installation and/or of an automation network and/or of a production installation that are in particular also a node of the distributed database system. The devices in this instance can be for example field devices or devices in the Internet of Things that are in particular also nodes of the distributed database system. Nodes can, by way of example, also comprise at least one processor, e.g., in order to perform their computer-implemented functionality.

Within the context of embodiments of the invention, "data protection levels" can be understood to for example mean security, privacy and/or confidentiality levels of data. The data protection levels are preferably determined based on data content and/or a label of the data. For example, data can be identified and/or marked/labeled as public, confidential or strictly confidential. Therefore, "data classification" can be understood as classifying or labeling of data according to such security, privacy and/or confidentiality levels. Data protection levels can also comprise an additional indication of the category of data, e.g., finance, engineering, administration.

Within the context of embodiments of the invention, "security policy rules" can be understood to mean for example rules or provisions prescribing specific authorised or unauthorised processing steps for a given dataset (e.g., sending, receiving, reading, writing, etc.). The security policy rules can be evaluated based on a certain data classification. In other words, data processing of classified data can be managed by the security policy rules.

The invention provides a Data Loss Prevention (DLP) solution that is specifically suited for a distributed database system, such as a blockchain-based distributed architecture. Data Loss Prevention summarizes information security approaches which focus on the protection of confidential data.

It is an advantage of the present invention that only authorized data can be unchangeable stored in a distributed database system. A data flow from a network to the distributed database system can be monitored and sensitive information can be detected and processed in accordance with security policy rules of the network. Unauthorized data can be for example modified and/or sent to another destination.

Furthermore, features specific to certain blockchain implementations like channels and private data collections (e.g., of Hyperledger Fabric) can be applied to secure sensitive information and also support application-specific use cases. Therefore, the described invention offers more and/or additional processing and routing functionalities using the features of the underlying blockchain technology. In addition to basic grant and deny decisions, the apparatus can implement a fine-grained handling of confidential information. For example, data can be routed/forwarded to multiple secure destinations, e.g., trusted partners that participate in a private channel or private data collections. Thereby, various data representations like redacted documents (e.g., reduction/exclusion of confidential information), encryption versions and/or hashed data can be supported.

The apparatus can enable a wide range of applications. The apparatus can for example be integrated within a Blockchain client, e.g., realizing a unified endpoint management. Alternatively, the apparatus can for example be implemented as a cloud access security broker (CASB) to filter and route data before leaving cloud deployments. Alternatively, the apparatus can for example be implemented as a network DLP, i.e., the apparatus can be integrated in a network gateway. Furthermore, the apparatus can also be combined with existing DLP solutions.

According to a preferred embodiment of the invention, the security policy rules can relate to authorisation of a destination and/or of a data content of the classified data.

Therefore, it can be managed/defined which destination and/or data content, based on the data classification, is authorised by means of the security policy rules.

According to a preferred embodiment of the invention, data processing can comprise data forwarding, data encryption, data hashing and/or data sanitization.

Therefore, depending on the data classification, data can be forwarded to the intended destination, or data can be first encrypted, hashed, and/or sanitized (e.g., redacted) before sending to a given destination.

According to a further embodiment of the invention, the classification unit can be configured to determine the classification of the received data by means of an AI-based data content evaluation.

An AI-based (Artificial Intelligence, AI) data content evaluation can for example comprise a trained artificial neural network. The artificial neural network is for example trained by means of training data to reproduce a data classification given certain data content, wherein the training data can comprise data content as input and data classifiers as output for training the neural network. For example, such AI-based data content evaluation can classify data as "confidential" if certain information is present in the data. Therefore, data can be automatically classified according to predefined data protection policies.

According to a further embodiment of the invention, the classified data can be sent to the separate storage and the corresponding processed data can be sent to the distributed database system.

Preferably in case of sensitive or confidential data which shall not be stored in the distributed database system according to the security policy rules, only processed data, e.g., encrypted, hashed or sanitized data, can be sent to the distributed database system. The original data is preferably only stored in a separate storage, e.g., off-chain.

According to a further embodiment of the invention, the processed data can be stored in the assigned destination.

The processed data can for example be inserted into the distributed database system, e.g., a transaction comprising the processed data can be stored in a data block.

According to a further embodiment of the invention, the data can comprise at least one transaction.

According to a further embodiment of the invention, the apparatus can be part of the network.

According to a further embodiment of the invention, the distributed database system can be configured as a blockchain or a distributed ledger.

According to a further embodiment of the invention, the apparatus can be implemented as a smart contract.

Preferably for a permissioned-blockchain, the apparatus can for example be realized using a smart contract. The data security policies of the network can for example be defined in a DLP smart contract and the contract can be governed by internal peers of the network organization. In this case, the DLP smart contract can for example invoke cross-chain/other smart contracts to submit transactions. Such smart contractbased realization can automate the data classification and can allow seamless updates of smart contracts when there are changes/updates made in the data security policy, since all nodes of the blockchain need to update the smart contract accordingly.

According to a second aspect, the invention provides a computer-implemented method for monitoring and controlling a data flow from a network to a distributed database network, comprising the method steps:
- receiving data from the network,
- determining a data classification of the received data according to predefined data protection levels and to output classified data,
- checking the classified data against security policy rules of the network and to output a check result,
- processing the classified data depending on the check result and to output processed data,
- assigning a destination to the classified data depending on the check result,
   and
- blocking the processed data or sending the processed data to the assigned destination, wherein the assigned destination is the distributed database network, a private channel of the distributed database network or a separate storage.

In addition, a computer program product (non-transitory computer readable storage medium having instructions, which when executed by a processor, perform actions) having program instructions for performing the aforementioned methods according to embodiments of the invention is claimed, wherein one of the methods according to embodiments of the invention, all of the methods according to embodiments of the invention or a combination of the methods according to embodiments of the invention is performable by means of the computer program product each time.

The invention will be explained in more detail by reference to the accompanying figures.
- Fig. 1:: shows a first exemplary embodiment of the apparatus for monitoring and controlling a data flow from a network to a distributed database system;
- Fig. 2:: shows a second exemplary embodiment of the apparatus for monitoring and controlling a data flow from a network to a distributed database system; and
- Fig. 3:: shows an exemplary embodiment of the computer-implemented method for monitoring and controlling a data flow from a network to a distributed database system.

Equivalent parts in the different figures are labeled with the same reference signs.

Moreover, in particular a (relevant) person skilled in the art, with knowledge of the method claim/method claims, is of course aware of all routine options for realizing products or options for implementation in the conventional art, and so there is no need in particular for independent disclosure in the description. In particular, these customary realization variants known to a person skilled in the art can be realized exclusively by hardware (components) or exclusively by software (components). Alternatively, and/or additionally, a person skilled in the art, within the scope of his/her expert ability, can choose to the greatest possible extent arbitrary combinations according to embodiments of the invention of hardware (components) and software (components) in order to implement realization variants according to embodiments of the invention.

A combination according to embodiments of the invention of hardware (components) and software (components) can occur in particular if one portion of the effects according to embodiments of the invention is brought about preferably exclusively by special hardware (e.g. a processor in the form of an ASIC or FPGA) and/or another portion by the (processor- and/or memory-aided) software.

In particular, in view of the high number of different realization options, it is impossible and also not helpful or necessary for the understanding of embodiments of the invention to name all these realization options. In this respect, in particular all the exemplary embodiments below are intended to demonstrate merely by way of example a few ways in which in particular such realizations of the teaching according to embodiments of the invention could be manifested.

Consequently, in particular the features of the individual exemplary embodiments are not restricted to the respective exemplary embodiment, but rather relate in particular to embodiments of the invention in general. Accordingly, features of one exemplary embodiment can preferably also serve as features for another exemplary embodiment, in particular without this having to be explicitly stated in the respective exemplary embodiment.

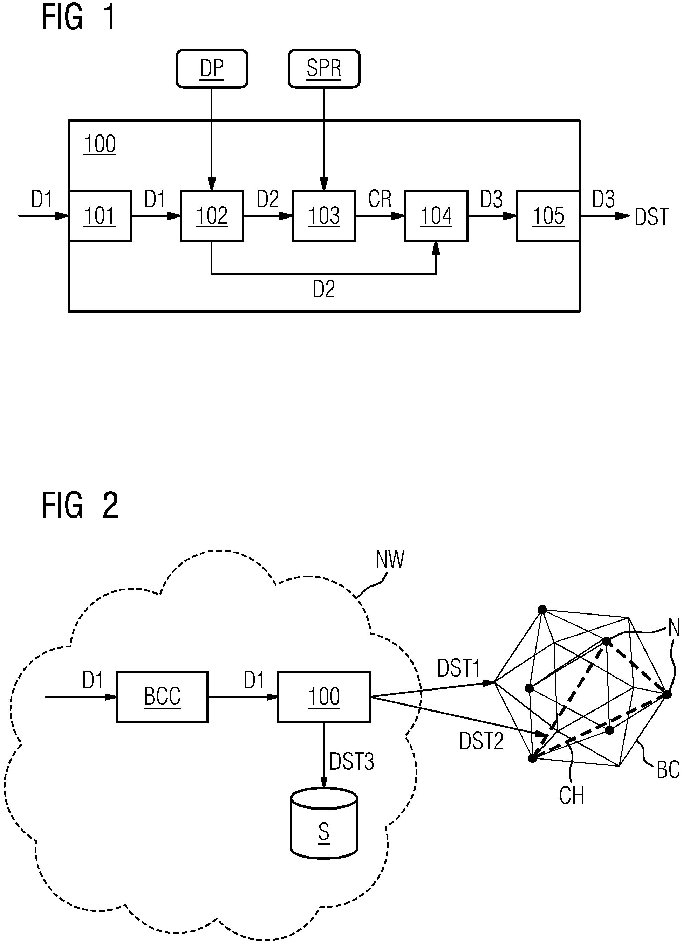

Fig. 1 shows a first exemplary embodiment of the apparatus 100 for monitoring and controlling a data flow from a network to a distributed database system.

The apparatus comprises an interface 101, a classification unit 102, a check unit 103, a data processing unit 104, and a sender 105. The apparatus 100 can be for example part of the network and/or be implemented as a gateway between the network and the distributed database system. The distributed database system can for example be a blockchain or a distributed ledger.

The apparatus is configured to monitor and control a data flow from the network to the distributed database, i.e., data are monitored according to security policy rules and sending the data to a specified destination is controlled by the apparatus.

The interface 101 is configured to receive data D1 from the network. For example, the data D1 is provided by participants or nodes, e.g., devices, of the network. The data D1 can for example comprise control data, a transaction, program code, information, measurement data, sensor data, text, etc. Furthermore, the interface 101 can further receive information about an intended destination of the data. The received data D1 is transmitted to the classification unit 102.

The classification unit 102 is configured to determine a data classification of the received data according to predefined data protection levels DP and to output classified data D2. The classified data D2 can comprise the original data D1 and a classifier according to the data protection levels DP. The data protection levels DP can for example be predefined and can relate to public, restricted, confidential, and strictly confidential data. The data D1 for example can already comprise a classifier/label according to the data protection levels DP. Alternatively, the classification unit 102 can determine the respective classifier analysing the content of the data D1, for example by means of an AI-based data content evaluation. An AI-based data content evaluation can for example be an artificial neural network, which is trained to output a classifier for the data D1 depending on the data content of the data D1. The classified data D2 is then transmitted to the check unit 103 and the data processing unit 104.

The check unit 103 is configured to check the classified data D2 against given security policy rules SPR of the network and to output a check result CR. The security policy rules SPR can be for example specified by nodes of the network or an organisation governing the network. The security policy rules SPR can relate to authorisation of a destination and/or to a data content of the classified data. In other words, the security policy rules SPR can for example prescribe the destination to which the classified data according to their data classification may be transmitted and/or the data content which may be transmitted to a given destination. Therefore, the check unit 103 provides monitoring of compliance of the security privacy rules SPR. To this end, the classified data D2 and/or the assigned classifier are checked against the security policy rules, in order to determine whether the classified data D2 meet the prescribed regulations. This check in particular depends on the data classification of the classified data D2.

For example, a security policy rule may prescribe that data classified as "confidential" may not be sent to the distributed database system but only to a private channel of distributed database system. In addition or as an alternative, such security policy rule may also define that the content of data classified as "confidential" may first be encrypted before sending it to a specified destination.

The classified data D2 is checked against the security policy rules SPR. For example, data classified as "confidential" are checked against the above-mentioned security policy rule. The check result CR then comprises at least an information if the classified data is in compliance with the security policy rule. Furthermore, the check unit can provide a processing instruction that shall be applied to the classified data D2. For example, if the received confidential data shall be sent to the distributed database, the check result CR can comprise information about non-compliance with the security policy rule. The check result CR in this example is hence negative and may further comprise information about the alternative destination, namely the private channel, and/or how data must further be processed.

The check result CR is transmitted to the data processing unit 104. The data processing unit 104 configured to process the classified data D2 depending on the check result CR and to output processed data D3, wherein data processing comprises data forwarding, data encryption, data hashing and/or data sanitization. Furthermore, the data processing unit 104 is configured to assign a destination DST to the classified data depending on the check result CR. Hence, the processing unit 104 analyses the check result and performs a rerouting and/or data processing if the check result CR is negative (i.e., the classified data do not meet the data policy rules). The data processing can in particular be performed by two separate units, i.e., one for processing the data D3 and one for assigning the destination DST.

Furthermore, the data D2 being checked may include a destination, e.g., a certain distributed database. This information can be checked by the check unit 103. The data processing unit 104 can modify the destination, so that the data can for example not be sent to the indicated distributed database but to another entity, e.g., a log server for logging blocked data.

In addition, the check unit 103 may perform another check of the processed data D2 in order to ensure that the processed data D2 meet the security policy rules SPR. Hence, the check unit 103 may receive the processed data D3 from the processing unit 104 to perform another check.

The assigned destination DST can be for example the originally intended destination, in particular the distributed database, or an alternative destination in case the check result CR negative. The alternative destination may be a local database storing data that was not allowed to be sent to the original destination.

Therefore, in the above-mentioned example, the confidential data can either be forwarded to a private channel of the distributed database and/or can for example first be sanitized or redacted. The sanitized data can then be forwarded to the sender 105 and can be inserted into the distributed database system.

The sender 105 is configured to send the processed data D3 to the assigned destination DST, wherein the assigned destination DST is the distributed database system, a private channel of the distributed database system or a separate storage.

Alternatively, the sender 105 can also block the processed data, i.e., prevent further data transmission to a given destination DST. In this case, the sender 105 can act as a filter.

In other words, the apparatus 100 processes data D1 according to the following steps, wherein the data is monitored and the transmission of the data to the distributed database is controlled based on the respective data classification:
First, content classification of the received data D1 is performed. Data classification can be performed based on labeling, such as evaluating existing classifiers of documents, or based on content and/or context evaluation using for example advanced machine/deep-learning-based approaches. Next, the network's security policy rules SPR are evaluated which determine the possible uses of the data D1. For instance, it can be specified by the security policy rules SPR which data protection levels (e.g., public, restricted, confidential) permit the transfer of the data D1 to the blockchain network without data modification, prevent/block the transfer or allow only restricted transfer, wherein the classified data D2 are first processed before routing. The result of the policy enforcement step determines the subsequent next steps, i.e., data processing and routing. The processing unit 104 can create additional representations of the classified data D2 based on the requirements that are determined through the policy enforcement step. Representations can be for example encryption, hashing, or redaction (i.e., information reduction) of the classified data D2. In addition, data processing can also only comprise data forwarding. Finally, the sender 105 forwards instances of the processed data D3 to the permitted destinations as defined by the security policy rules SPR and/or the initial transmission request. Thereby, multiple paths (additional to the one originally specified by the transmission request) can be specified.

As a further example, assuming that the received data D1 represent corporate proprietary information (e.g., intellectual property and is therefore classified "confidential"), the following process describes an exemplary execution sequence: It may be specified by the security policy rules that confidential data may not be transferred to the blockchain. Instead, a hash value D3 of the data D2 is created and entered into a transaction. A copy of the source data D2 can additionally be stored in a separate storage (e.g., a private data collection).

Alternatively, the apparatus 100 can also be realized as a smart contract which is executed by nodes of the distributed database system, wherein the distributed database is preferably a permissioned blockchain. The security policy rules of the network can then be defined or evaluated by the smart contract. The contract can be governed by internal peers of the network's organization. The smart contract then monitors and controls the data flow from the network to the blockchain network. Data is inserted in the distributed database by the smart contract, e.g., included as transaction in a confirmed block of a distributed ledger or blockchain, if the provided data D1 complies with the security policy rules as processed by the smart contract. The smart contract may, depending on the defined security policy rules, process the provided data D1 to determine a sanitized, modified version of the provided data D1 and create a transaction that includes the sanitized, modified version of the provided data D1 that is then inserted in the distributed database by the smart contract.

Figure 2 shows another exemplary embodiment of the apparatus 100 for monitoring and controlling a data flow from a network NW to a distributed database system BC, such as a blockchain network.

The apparatus 100 is configured to monitor and control the data flow D1 of a blockchain client BCC located in the network NW to a blockchain based system BC. The network NW can be for example a corporate network which can be an Intranet, industrial network zone or also a cloud environment (e.g., a virtual private cloud). The network NW is preferably controlled by one organization.

The blockchain network BC comprises multiple nodes N and represents part of an application/system architecture that follows a shared responsibility and ownership model, i.e., for example multiple organizations can operate the blockchain and can hence have access to its components (e.g., blockchain nodes and data managed by those). The organization of the network NW can act as one party in the blockchain BC. Data stored in the blockchain BC can be managed by all organizations according to rules/architecture of the blockchain network. Therefore, the blockchain is not controlled by one organization.

The apparatus 100 is configured to supervise and control a data flow from a network which is under control of one organization to a potentially open network, e.g., a public blockchain network. One objective is to prevent disclosure of confidential information (e.g., company proprietary information) to such an uncontrolled network.

Before users of the network's NW organization can send data D1 to the blockchain system BC, the intended data transfer is analyzed and controlled by the apparatus 100 according to the network's security policy. Depending on the result of the policy evaluation, the data transfer can be blocked (i.e., acting as filter), re-routed, and/or the data content can be modified (i.e., protected or redacted).

Figure 2 illustrates possible destinations DST1, DST2, DST3 of data traffic. The blockchain network can for example be realized using Hyperledger Fabric as underlying blockchain architecture.

The apparatus 100 comprises a check unit which is configured to check the data against security policy rules of the network NW and to output a check result. Depending on the check result, the data is processed and/or routed to a permitted destination DST1, DST2, DST3. Data processing can comprise forwarding without modification, data encryption, data hashing and/or data sanitization.

For example, the data D1 can be cleared, i.e., permitted data transfer, and therefore forwarded and stored in the blockchain network BC as a first destination DST1.

In general, if received data D1 are in compliance with the security policy rules SPR, the data can be forwarded to the intended destination. If the data D1 do not meet the security policy rules, either the intended destination is modified and/or the data content is processed. The required data processing can be specified by the security policy rules. For example, a security policy rule may specify that public data having the blockchain network BC as intended destination can be forwarded by the apparatus to be inserted into the blockchain. In addition or alternatively, the security policy rule may further specify that confidential data having the blockchain network BC as intended destination, are not allowed to be forwarded to the blockchain network, but shall be blocked and processed, e.g., redacted, wherein only the processed data can be sent to the blockchain network.

In another example, the data may be classified as "restricted", hence, the data can be disclosed but only to a restricted group of recipients. In this example, the data can be stored in a separate channel CH as the second destination DST2 instead of the overall blockchain network BC.

In another example, the data may be classified as "strictly confidential". Therefore, the data transmission to the blockchain BC is blocked and the data cannot be stored in the blockchain. However, it is possible to execute the corresponding transaction by storing reference information of the data in the blockchain, e.g., a hash of the original data D1 and/or storing the original data D1 in a separate data storage S as a third destination DST3. Through private communication, the original data D1 can be for example shared within a restricted group of trusted partners.

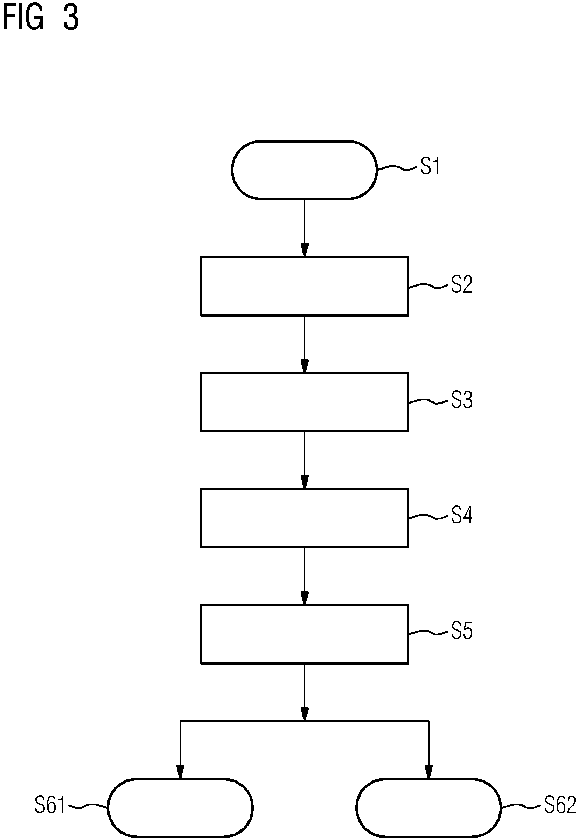

Figure 3 shows a flow chart as an exemplary embodiment of the computer-implemented method for monitoring and controlling a data flow from a network to a distributed database system. The method comprises the following method steps:
In a first step S1 data are received from the network. For example, nodes of the network can provide/send data to be inserted into the distributed database.

In the next step S2 a data classification of the received data is determined according to predefined data protection levels and classified data are outputted, wherein the classified data comprise a respective classifier. The data classification can for example be based on an analysis of the data content. Alternatively, the received data are already labelled according to the data protection levels, such that only the respective labels need to be read.

In the next step S3 the classified data is checked against security policy rules of the network and a check result is provided. The security policy rules may be defined by an organization controlling the network. The security policy rules can specify which data content can be sent to a specific destination. The check result can be positive if the classified data meet the security policy rules. The check result can be negative if the classified data do not meet the security policy rules. In the latter case, the check result may comprise additional information about the security policy violation, such as for example, providing information that the intended destination of the classified data is not permitted.

In the next step S4 the classified data are processed depending on the check result and the processed data are provided. If the check result is positive, the classified data is preferably forwarded without modification. In addition, the processed data may be rechecked in order to ensure that the processed data meet the security policy rules.

In the next step S5 a destination is assigned to the classified data depending on the check result. This step S5 can in particular be performed before, after or in parallel to the preceding data processing step S4.

In the next step S61 the processed data are sent to the assigned destination, wherein the assigned destination is the distributed database network, a private channel of the distributed database network or a separate storage.

The processed data can then for example be stored in the assigned destination, e.g., inserted into the distributed database.

Alternatively, in step S62, the processed data are not further transmitted/are blocked. For example, in case of strictly confidential data, i.e., the data transfer to the distributed database system can be blocked independent of the data representation.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Apparatus (100) for monitoring and controlling a data flow from a network (NW) to a distributed database system (BC), the apparatus comprising:
- an interface (101) connected to the network (NW) and configured to receive data (D1) from the network,
- a classification unit (102) configured to determine a data classification of the received data according to predefined data protection levels (DP) and to output classified data (D2),
- a check unit (103) configured to check the classified data (D2) against security policy rules (SPR) of the network and to output a check result (CR),
- a data processing unit (104) configured
- to process the classified data (D2) depending on the check result (CR) and to output processed data (D3), and
- to assign a destination (DST) to the classified data depending on the check result (CR),
and
- a sender (105) configured to block the processed data (D3) or to send the processed data (D3) to the assigned destination (DST), wherein the assigned destination is the distributed database system (BC), a private channel of the distributed database system (CH) or a separate storage (S).

2. Apparatus according to claim 1, wherein the security policy rules (SPR) relate to authorisation of a destination and/or of a data content of the classified data.

3. Apparatus according to one of the preceding claims, wherein data processing comprises data forwarding, data encryption, data hashing and/or data sanitization.

4. Apparatus according to one of the preceding claims, wherein the classification unit is configured to determine the classification of the received data by means of an AI-based data content evaluation.

5. Apparatus according to one of the preceding claims, wherein the classified data is sent to the separate storage and the corresponding processed data is sent to the distributed database system.

6. Apparatus according to one of the preceding claims, wherein the processed data is stored in the assigned destination.

7. Apparatus according to one of the preceding claims, wherein the data comprises at least one transaction.

8. Apparatus according to one of the preceding claims, wherein the apparatus is part of the network.

9. Apparatus according to one of the preceding claims, wherein the distributed database system is configured as a blockchain or a distributed ledger.

10. Apparatus according to one of the preceding claims, wherein the apparatus is implemented as a smart contract.

11. Computer-implemented method for monitoring and controlling a data flow from a network to a distributed database network, comprising the method steps:
- receiving (S1) data from the network,
- determining (S2) a data classification of the received data according to predefined data protection levels and to output classified data,
- checking (S3) the classified data against security policy rules of the network and to output a check result,
- processing (S4) the classified data (D2) depending on the check result (CR) and to output processed data (D3),
- assigning (S5) a destination to the classified data depending on the check result (CR),
and
- blocking (S61) the processed data or sending (S62) the processed data (D3) to the assigned destination, wherein the assigned destination is the distributed database network (BC), a private channel of the distributed database network (CH) or a separate storage (S).

12. Computer program product directly loadable into the internal memory of a digital computer, comprising software code portions for performing the method steps according to claim 11 when said computer program product is run on a computer.
